# EUROPÄISCHE PATENTANMELDUNG

(11) **EP 4 029 615 A1**
(43) Veröffentlichungstag der Anmeldung: **20.07.2022**
(21) Anmeldenummer: 22150885.6
(22) Anmeldetag: 11.01.2022
(51) Int. Cl.: B07B 1/46, C23C 8/02, C23C 8/20, C23C 8/22, C23C 8/24, C23C 8/26, C23C 8/28, C23C 8/30, C23C 8/32, C23C 8/34, C23C 8/80

(54) **SIEBGEWEBE MIT ERHÖHTER VERSCHLEISSFESTIGKEIT UND VERFAHREN ZUR ERHÖHUNG DER VERSCHLEISSFESTIGKEIT EINES SIEBGEWEBES**

(30) Priorität: 13.01.2021 DE 102021000118
(71) Anmelder: ALLGAIER WERKE GmbH, 73066 Uhingen (DE)
(72) Erfinder: Trojosky, Mathias, 73230 Kirchheim unter Teck (DE); Rupp, Thomas, 72574 Bad Urach (DE); Lenz, Matthias, 71384 Weinstadt (DE); Wacker, Bernhard, 73525 Schwäbisch Gmünd (DE)
(74) Vertreter: Bosch Jehle Patentanwaltsgesellschaft mbH

(57) **Zusammenfassung**

Die Erfindung bezieht sich auf ein Verfahren zur Erhöhung der Verschleißfestigkeit eines aus Draht hergestellten metallischen Siebgewebes, wobei das Verfahren umfasst:
Behandeln einer Oberfläche eines metallischen Siebgewebes mittels eines thermochemischen Randschichtverfahrens zur Erhöhung der Oberflächenhärte und des Verschleißwiderstands von Metallen, wobei das thermochemische Randschichtverfahren die Gefügestruktur des behandelten Metalls bis zu einer vorgegebenen Eindringtiefe verändert, wobei in der Metalloberfläche eine harte Oberflächenschicht gebildet wird. Eine entsprechende Vorrichtung und ein Siebgewebe und ein Siebbelag mit erhöhter Verschleißfestigkeit sind ebenfalls Teil der Erfindung.

## Beschreibung

Die Erfindung betrifft ein Siebgewebe mit erhöhter Verschleißfestigkeit und ein Verfahren zur Erhöhung der Verschleißfestigkeit eines Siebgewebes. Speziell bezieht sich die Erfindung auf ein Verfahren zur Behandlung eines aus metallischen Drähten gewebten Siebes zur Erhöhung der Oberflächenhärte und des Verschleißwiderstands des metallischen Siebgewebes.

Siebmaschinen zur Klassierung von Schüttgütern oder zur Abtrennung von Partikeln aus Flüssigkeiten sind in der industriellen Praxis weit verbreitet und stellen eine weitgehend ausgereifte Technologie zur Herstellung von Partikelfraktionen verschiedener Kornklassen oder zur Absiebung grober Fremdstoffe aus gekörnten Gütern oder aus Flüssigkeiten dar. Die Maschinen und Verfahren kommen in großer Vielzahl in nahezu allen Industriebereichen vor.

Dementsprechend wurden in der Vergangenheit Siebmaschinen sehr unterschiedlicher Bauformen nach unterschiedlichen Funktionsprinzipien entwickelt. Beispielsweise unterscheidet man Vibrations-Siebmaschinen, sog. "Sizer" mit schräg liegenden Sieben, Plansiebmaschinen oder Taumelsiebmaschinen.

Die zur Trennung der Güter verschiedener Partikelgrößen eingesetzten Siebmaschinen besitzen Siebdecks, welche vorwiegend aus Siebbelegen aus metallischen oder nichtmetallischen Geweben, aus Spaltsieben oder perforierten Blechen bestehen können.

Je nach Größe der Öffnungen in den Siebbelägen, bzw. der Maschenweite bei Geweben erfolgt eine Trennung der Schüttgüter in Feingut, welches durch die Öffnungen bzw. Maschen fällt, und Grobgut, welches auf dem Siebbelag zu einem Grobgutaustrag gefördert wird.

Die Siebdecks oder Siebbelege werden entweder fest in die Gehäuse der Siebmaschinen eingebaut und zusammen mit diesen schwingend bewegt. Alternativ stehen die Maschinengehäuse fest, während nur die Siebdecks oder die Siebbelege selbst durch geeignete Mechanismen in den sonst statischen Maschinengehäusen bewegt werden.

Allen Siebmaschinen ist gemein, dass die am meisten beanspruchten Teile der Siebmaschinen die Siebbeläge der Siebdecks sind. Diese unterliegen sowohl durch die ständige Schwingungsbewegung mit meist hoher Beschleunigung als auch durch den Kontakt mit den abzusiebenden Materialien einem stetigen Verschleiß. Je nach Beanspruchung versagen z.B. die Siebgewebe, indem einige oder mehrere Drähte der Gewebe durchgescheuert werden und in der Folge reißen. Danach ist die beabsichtigte Klassierung der Schüttgüter nicht mehr möglich, und die Siebdecks mit den Siebbelägen oder nur die Siebbeläge, also z.B. die Siebgewebe, müssen getauscht werden, bevor die Produktion fortgesetzt werden kann. Kommen gewebte Siebbeläge zum Einsatz, so können die Siegewebe entweder wie in den meisten Fällen aus Stahldraht oder optional z.B. auch aus Kunststoffdraht hergestellt werden. Die Auswahl des Materials hängt z.B. ab von der chemischen, d.h. korrosiven oder von der mechanisch-abrasiven Belastung durch die zu behandelnden Schüttgüter. Der Grad der abrasiven Belastung kann unter anderem durch die Härte der Partikeln, deren Kornform oder zeitliche Menge, welche über oder durch den Siebbelag fließen, beeinflusst sein.

Eine zusätzliche korrosive oder chemisch bedingte Belastung der Siebgewebe kann entstehen, wenn die zu behandelnden Siebgüter eine gewisse Feuchte aufweisen und zusätzlich z.B. Salze oder Säuren beinhalten. Übliche Edelstähle oder aber verfügbare Sonderstähle halten den in Siebprozessen auftretenden chemisch-korrosiven Belastungen meistens ausreichend Stand.

In der sehr überwiegenden Anzahl heutiger Anwendungen kommt zur Herstellung von Siebgeweben Edelstahl-Draht zum Einsatz, beispielsweise aus dem Werkstoff 1.4301 (AISI 304, V2A). In Fällen zu erwartender höherer Belastung der Gewebe durch mechanischen Verschleiß kann für die Siebgewebeherstellung Stahldraht z.B. aus dem Werkstoff 1.4310 (AISI 301) verwendet werden. Bei diesem Werkstoff 1.4310 handelt es sich um einen sog. federharten Werkstoff, der gegenüber z.B. dem Werkstoff 1.4301 eine höhere Härte und damit eine bessere Verschleißfestigkeit aufweist.

Ein optionaler, ebenfalls verschleißarmer Stahl, aus welchem Stahldraht zur Fertigung von Siebgeweben hergestellt wird, ist der Werkstoff 1.0586 (C50D NIA Stahl), welcher allerdings ein nicht korrosionsfester Normalstahl ist. Er kann aus diesem Grunde begrenzt nur für nicht-korrosive Produkte und Prozess-Bedingungen eingesetzt werden.

Da Anwendungen mit erhöhtem Verschleiß seltener vorkommen, wird Drahtmaterial aus oben genannten verschleißreduzierten Stählen üblicherweise nicht in großen Mengen sowie auch nicht in allen sonst üblichen Drahtstärken produziert und auf Lager vorgehalten. Daraus folgt, dass bei der Beschaffung dieser Sondermaterialien zur Herstellung spezieller Siebgewebe häufig lange Lieferzeiten oder hohe Kosten entstehen.

In verschiedenen Anwendungsfällen, insbesondere bei der Absiebung von groben Materialien werden vereinzelt Siebgewebe aus zuvor beschichtetem Stahldraht hergestellt.

Die Beschichtung der Drähte hat zum Ziel, dass ebenfalls die Verschleißanfälligkeit der hergestellten Siebgewebe reduziert wird. Für die Beschichtung können weitgehend unabhängig vom verwendeten Grundwerkstoff der Siebgewebe geeignete Beschichtungsmaterialien aus Kunstoffen wie Gummi, Kunstharzen, glasartigen Materialien etc. Verwendung finden. Die Beschichtung des Drahtes zur Herstellung der Gewebe ist allerdings zum einen ebenfalls sehr aufwändig, da Draht von vielen Metern bzw. Kilometern Länge beschichtet, die Beschichtung ausgehärtet und der Draht in der Regel wieder aufgerollt werden muss, bevor er zur Herstellung von Siebgeweben verwendet werden kann. Zum anderen sind aus beschichtetem Draht hergestellte Siebgewebe häufig von geringerer Maßhaltigkeit, insbesondere wenn die Beschichtungsstärke wegen der Eigenschaften der verschiedenen Beschichtungssysteme relativ dick sein muss oder nicht exakt eingehalten werden kann. Das bedingt, dass sehr feine oder sehr präzise Siebgewebe mit meist geringen Maschenweiten üblicherweise nicht aus beschichtetem Drahtmaterial hergestellt werden, bzw. hergestellt werden können.

Kommt es zu lokalen Beschädigungen derartiger Beschichtungen in Siebmaschinen während des Anlagenbetriebes, kann es in der Folge der weiteren Verwendung vorgeschädigter Siebbeläge zu einem beschleunigten Verschleiß beispielsweise durch lokales oder großflächiges Ablösen der Beschichtungen kommen.

Alternativ kann ein bereits hergestelltes, metallisches Siebgewebe nur lokal auf der dem zu behandelnden Feststoff zugewandten Seite des Gewebes und nur an den Stellen der Drähte des Gewebes beschichtet wird, welche durch die Gewebestruktur und -geometrie bzw. die durch das Weben erfolgende Biegung der einzelnen Drähte am weitesten hervorgewölbt und damit einem Verschleiß besonders ausgesetzt sind.

Diese Vorgehensweise hat den Nachteil, dass bei dieser Art der Beschichtung eine gute Haltbarkeit der Beschichtung auf den nur teilweise beschichteten Bereichen der Siebgewebe nicht immer gesichert ist und damit auch die Lebensdauer der so beschichteten Gewebe eingeschränkt ist, wenn sich einzelne Bezirke der lokalen Beschichtung abgelöst haben sollten.

Nachteilig an der beschriebenen Lösung ist weiterhin, dass die lokal aufgebrachten sehr kleinen Mengen von Beschichtungsmaterial im Falle eines Ablösens von den Drahtoberflächen in das zu siebende Produkt, entweder in das Feingut oder in das Grobgut, gelangen und dieses dadurch verunreinigen.

Sehr feine Siebgewebe, welche aus besonders dünnem Drahtmaterial hergestellt sind, können in der beschriebenen Weise nicht zuverlässig und gleichmäßig mit hoher Qualität beschichtet werden, da die Viskosität verfügbarer Beschichtungsstoffe einen Einfluss z.B. auf die Fließeigenschaften der Beschichtungsstoffe haben und deshalb bei beispielsweise hoher gegebener Viskosität nicht für feinste Siebgewebe verwendet werden können. Bei feinen Maschenweiten würden durch die Verwendung hochviskoser Beschichtungsmaterialien die Abstände zwischen den Drähten leicht verstopfen und das Siebgewebe unbrauchbar machen. Die Anwendbarkeit derartiger Beschichtungen ist also bezüglich der Maschenweiten und der Drahtstärken der Siebgewebe nach unten hin beschränkt.

Somit ist es eine Aufgabe der vorliegenden Erfindung, ein Verfahren bereit zu stellen, welches die Mängel und Nachteile herkömmlicher Verfahren beseitigt bzw. ausschließt. Erfindungsgemäß wird ein Verfahren vorgeschlagen, welches einfach und kostengünstig zur Herstellung bzw. Bearbeitung von Siebgeweben bzw. Siebbelägen angewendet werden kann, welche eine deutlich erhöhte Widerstandsfähigkeit gegen insbesondere mechanischen Verschleiß durch Abrasion aufweisen. Ferner ist es eine Aufgabe der vorliegenden Erfindung, Siebgewebe bzw. Siebbeläge zur Verfügung zu stellen, welche eine deutlich erhöhte Widerstandsfähigkeit gegen insbesondere mechanischen Verschleiß durch Abrasion aufweisen.

Außerdem sollen fertigungstechnische und logistische Nachteile ausgeschlossen werden, die dadurch entstehen, dass für den Fall der Herstellung von Drahtgeweben aus vorher behandeltem Drahtmaterial große Mengen von Draht in unterschiedlichen Drahtstärken behandelt und nachfolgend vorgehalten werden müssen.

Die erfindungsgemäße Aufgabe wird durch die Verfahren gemäß den Ansprüchen 1 und 9, der Vorrichtung gemäß Anspruch 10, dem Siebgewebe gemäß Anspruch 11, sowie dem Siebbelag gemäß Anspruch 12 gelöst. Weitere vorteilhafte Ausgestaltungen der Erfindung sind in den abhängigen Ansprüchen 2 - 8 angegeben.

Gemäß einem Aspekt der Erfindung wird ein Verfahren zur Erhöhung der Verschleißfestigkeit eines aus Draht hergestellten metallischen Siebgewebes bereitgestellt, wobei das Verfahren umfasst:
Behandeln einer Oberfläche eines metallischen Siebgewebes mittels eines thermochemischen Randschichtverfahrens zur Erhöhung der Oberflächenhärte und des Verschleißwiderstands von Metallen, wobei das thermochemische Randschichtverfahren die Gefügestruktur des behandelten Metalls bis zu einer vorgegebenen Eindringtiefe verändert, wobei in der Metalloberfläche eine harte Oberflächenschicht gebildet wird.

Zweckmäßigerweise ist das metallische Siebgewebe aus Eisendrähten oder Stahldrähten gewebt.

Vorteilhafterweise beträgt die vorgegebene Eindringtiefe höchstens ein Drittel eines Durchmessers der Eisendrähte oder Stahldrähte, aus denen das metallische Siebgewebe gewebt ist. Dadurch wird verhindert, dass der Draht vollständig durchgehärtet und folglich spröde wird. Somit verbleibt im Inneren des Drahtes ein nicht gehärteter, zäher Materialkern, der eine gute Dauerfestigkeit des Drahtes gewährleistet. Durch die beschriebene Vorgehensweise einer begrenzt tiefen Aufhärtung kann die Zähigkeit des verbleibenden Materialkernes gegenüber dem Vorzustand außerdem sogar noch erhöht werden.

Gemäß einem bevorzugten Ausführungsbeispiel wird das metallische Siebgewebe in einen spiralförmig gerollten Zustand gebracht, bevor das Siebgewebe mittels des thermochemischen Randschichtverfahrens behandelt wird, wobei eine Vielzahl von Abstandhaltern zwischen einzelnen Gewebelagen des spiralförmig gerollten Siebgewebes angeordnet ist, um zu gewährleisten, dass sich die einzelnen Gewebelagen nicht gegenseitig berühren. Somit wird sichergestellt, dass keine (Teil-)Bereiche der Oberflächen der Siebgewebe abgedeckt oder beschattet werden oder sich gegenseitig berühren, so dass die vorgesehene Behandlung zum Zwecke des Härtens mittels des thermochemischen Randschichtverfahrens lokal behindert würde.

Gemäß einem alternativen Ausführungsbeispiel wird das metallische Siebgewebe auf einen Rahmen gespannt, bevor das Siebgewebe mittels des thermochemischen Randschichtverfahrens behandelt wird.

Vorteilhafterweise wird als thermochemisches Randschichtverfahren Aufkohlen, Nitrieren, oder Nitrocarburieren verwendet, wobei beim Aufkohlen eine Prozesstemperatur von bis zu 480°C und beim Nitrieren und Nitrocarburieren eine Prozesstemperatur von bis zu 400°C verwendet wird.

Gemäß einem weiteren Aspekt der Erfindung wird ein Verfahren zur Herstellung eines Siebbelags mit erhöhter Verschleißfestigkeit bereitgestellt, wobei das Verfahren aufweist: Behandeln eines metallischen Siebgewebes mit einem Verfahren zur Erhöhung der Verschleißfestigkeit eines metallischen Siebgewebes gemäß einem der vorhergehenden Ansprüche; und
Aufspannen des behandelten Siebgewebes auf einen Siebrahmen unter einer vorgegebenen Spannung, um einen Siebbelag mit erhöhter Verschleißfestigkeit zu erhalten.

Werden Siebbeläge für insbesondere Rundmaschinen wie Taumelsiebmaschinen hergestellt, so werden die Siebgewebe bei der Herstellung eines Siebdecks unter einer vorgegebenen allseitigen Spannung auf den Siebrahmen gespannt, dort mit dem Siebrahmen verklebt oder verlötet und so lange unter Spannung gehalten, bis der Klebstoff oder der Lötzusatzstoff ausgehärtet ist. Durch dieses Vorgehen wird ein Siebbelag erzeugt, dessen Siebgewebe eine zweckmäßig hohe Spannung aufweist, welche wiederum für ein qualitativ hochwertiges Siebergebnis von Vorteil bzw. entscheidend ist.

Auch wenn bei den oben beschriebenen Verfahren relativ geringe Temperaturen von z.B. bis ca. 400 °C oder bis ca. 480 °C oder auch noch geringer verwendet werden, so ist zu erwarten, dass sich durch die Temperaturbeaufschlagung Spannungen im Material lösen, also hier speziell Spannungen im Material durch das Ziehen des Drahtes. Somit würden Siebgewebe ohne eine Behandlung nach der vorbeschriebenen Art und Weise eventuell mehr oder weniger gleichmäßig oder auch ungleichmäßig beeinflusst, könnten sich also unter Umständen etwas verziehen.

Ein Härten der Siebgewebe vor dem Bespannen der Siebrahmen zum Siebbelag ist daher besonders vorteilhaft, da Spannungen im Siebgewebe durch die Wärmebeaufschlagung abgebaut werden und dadurch vermieden wird, dass die Spannung des Siebgewebes auf den hergestellten Siebbelägen durch die mit dem Härten einhergehende Temperaturbelastung nachlässt, wie es bei einem nachträglichen Härten schon aufgespannter Siebbeläge möglich sein könnte bzw. wahrscheinlich ist.

Durch das Behandeln der Siebgewebe vor dem Bespannen der Siebrahmen zum Siebbelag ist einerseits ein durch das Lösen der Spannungen im Draht entstehender Verzug im Siebgewebe unproblematisch und andererseits kann dadurch sogar eine gleichmäßigere Siebbespannung erzielt werden, wodurch die Spannung des Siebgewebes länger erhalten werden könnte.

Gemäß einem weiteren Aspekt der Erfindung wird eine Vorrichtung bereitgestellt, welche dafür eingerichtet ist, das Verfahren gemäß einem der Ansprüche 1 - 9 auszuführen.

Gemäß einem weiteren Aspekt der Erfindung wird ein Siebgewebe bereitgestellt, dessen Verschleißfestigkeit durch Anwendung des Verfahrens nach einem der Ansprüche 1 bis 8 erhöht worden ist.

Gemäß einem weiteren Aspekt der Erfindung wird ein Siebbelag mit erhöhter Verschleißfestigkeit bereitgestellt, welcher gemäß dem Verfahren nach Anspruch 9 hergestellt worden ist.

Im Folgenden werden bevorzugte Ausführungsbeispiele der vorliegenden Erfindung anhand der nachfolgenden Figuren beschrieben.
Figur 1 zeigt ein Ausführungsbeispiel eines für die Einbringung in eine Behandlungsanlage aufgerollten Siebgewebes.
Figur 2 zeigt ein Ausführungsbeispiel eines zur Behandlung in einen Halterahmen eingespannten Siebgewebes.
Figur 3 zeigt ein Ausführungsbeispiel eines fertigen Siebbelags für einen sog. Sizer mit Halterungen zum Einspannen des Siebbelages in eine Siebmaschine, wie er hängend im Ganzen in eine Behandlungsanlage zur Oberflächenhärtung eingebracht werden kann.

Zur Herstellung der verschleißgeschützten Siebbeläge werden bevorzugt Siebgewebe aus Edelstahl verwendet, welche in großen Mengen und hoher Variabilität aus Standard-Werkstoffen (speziell üblichen Edelstählen wie z.B. 1.4301) einfach am Markt verfügbar sind. Die Werkstoffe derartiger einfach verfügbarer Siebgewebe weisen üblicherweise keine besondere Widerstandsfähigkeit gegenüber mechanischem Verschleiß auf, sind jedoch preiswert, und Siebgewebe aus diesem Werkstoff werden in sehr hoher Variabilität hergestellt. Diese Siebgewebe werden in üblicher Weise so zugeschnitten, dass sie bereits die Maße für die weitere Verarbeitung, d.h. z.B. die Bespannung von Siebrahmen aufweisen.

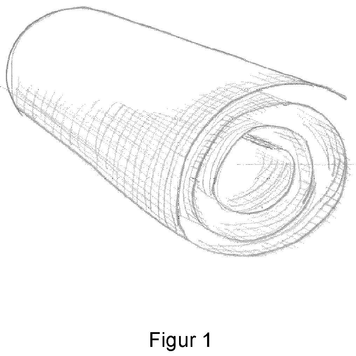

Abhängig von den Maßen verfügbarer Behandlungsanlagen zur Erhöhung der Verschleißfestigkeit durch Oberflächenhärten, welche nachfolgend beschrieben werden, werden die so zugeschnittenen Siebgewebe entweder spiralförmig aufgerollt und durch geeignete Abstandhalter an bevorzugt den Außenrändern der Zuschnitte so gestützt, dass sich die einzelnen Gewebelagen nicht gegenseitig berühren. Letzteres ist notwendig, um zu gewährleisten, dass keine Bereiche bzw. Teilbereiche der Oberflächen der Siebgewebe abgedeckt oder beschattet werden oder sich gegenseitig berühren, so dass die vorgesehene Behandlung zum Zwecke des Härtens in einer temperierten Gasatmosphäre lokal behindert würde. Figur 1 zeigt ein Ausführungsbeispiel eines für die Einbringung in eine Behandlungsanlage spiralförmig aufgerollten Siebgewebes, wobei die oben beschriebenen Abstandhalter nicht dargestellt sind.

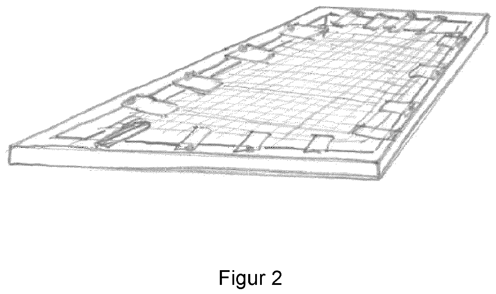

Optional kann das zugeschnittene Gewebe auch in einer vorzugsweise rahmenförmigen, metallischen Vorrichtung so eingespannt werden, dass es plan eben in die Behandlungskammer eingeführt werden kann und nicht gerollt werden muss. Figur 2 zeigt ein zur Behandlung in einen Halterahmen eingespanntes Siebgewebe. Diese Methode kann vorzugsweise zum Einsatz kommen, wenn Siebgewebe eher kleinerer Abmessungen behandelt werden sollen, bzw. wenn Behandlungsanlagen besonders großer Abmessungen zur Verfügung stehen und somit keine Notwendigkeit zum Aufrollen des Gewebes besteht.

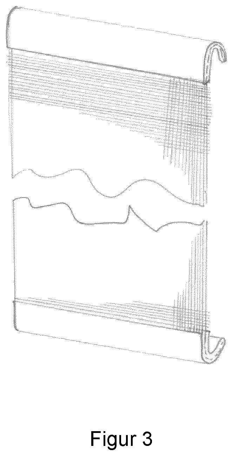

In einer weiteren Variante kann das bereits zu einem fertigen Siebbelag mit Halterungen versehene Siebgewebe zusammen mit den Halterungen als fertiger Siebbelag in die Behandlungskammer eingeführt werden. Das ist möglich, wenn der gesamte Siebbelag z.B. aus metallischen Werkstoffen hergestellt wird, die den thermischen und chemischen Belastungen in der Behandlungsanlage zur Erhöhung der Verschleißfestigkeit standhalten, wie das z.B. bei Siebbelägen für sog. Sizer der Fall ist. Derartige Siebbeläge werden nicht auf einem Rahmen vorgespannt, sondern erst in der Siebmaschine beim Einbauen gespannt. Figur 3 zeigt einen fertigen Siebbelag für einen Sizer mit Halterungen zum Einspannen des Siebbelages in eine Siebmaschine, wie er hängend im Ganzen in eine Behandlungsanlage zur Oberflächenhärtung eingebracht werden kann. Bei derartigen Siebbelägen werden die Siebgewebe am oberen und unteren Rand mit entlang der Kontur des Siebbelages geführten Blechen verpresst, sodass keine Klebstoffe verwendet werden müssen, die z.B. nur beschränkt temperaturbeständig wären.

Es stehen bei spezialisierten Fertigungsbetrieben Behandlungskammern zur Verfügung, die eine derartige Vorgehensweise auch für Siebbeläge ermöglichen, die eine Längen- und/oder Breiten-Ausdehnung von z.B. bis 3,5 Metern aufweisen.

In der Behandlungskammer zur Erhöhung der Verschleißfestigkeit werden das oder die so vorbereiteten Siebgewebe oder Siebbeläge durch einen thermischen Prozess unter Anwesenheit einer definierten Atmosphäre aus verschiedenen Gasen und bei einem vorgegebenem Druck über einen ebenfalls definierten Zeitraum Bedingungen ausgesetzt, die dazu führen, dass es zu einem Eindiffundieren von Gasen in die Oberfläche der metallischen Siebgewebe kommt und infolge dessen zu einer Gefügeveränderung in den oberflächennahen Schichten der Siebgewebe.

Geeignete Prozesse für die Erhöhung der Verschleißfestigkeit von Siebgeweben sind beispielsweise das Aufkohlen, welches auch als Carburieren bezeichnet wird, das Nitrieren, welches auch als Nitridieren oder Aufsticken bezeichnet wird, oder das Nitrocarburieren.

Aufkohlen bezeichnet ein Verfahren, bei welchem Kohlenstoff in Metalle, insbesondere Stahl, eindiffundiert. Dazu wird bei herkömmlichen Verfahren in einer kohlenstoffhaltigen Umgebung z.B. Eisen oder Stahl, auf Temperaturen von bis zu 850°C oder mehr erhitzt. Moderne Verfahren benutzen Prozesstemperaturen von bis zu ca. 480°C. Der Kohlenstoff, bzw. die kohlenstoffhaltigen Verbindungen können hierbei in fester, flüssiger oder gasförmiger Form zugeführt werden.

Für das Behandeln von insbesondere sehr feinen Siebgeweben ist das Bereitstellen von Kohlenstoff in der Gasphase vorteilhaft, um eine gleichmäßige Behandlung der Oberfläche zu erreichen. Hierbei wird vorzugsweise ein Kohlenwasserstoff, wie z.B. Methan oder Propan, als Anreicherungsgas einem geeigneten Trägergas geregelt zugefügt, um eine geeignete kohlenstoffangereicherte Atmosphäre zu erzeugen. Die Prozess- bzw. Behandlungsdauer beim Aufkohlen kann z.B. bis zu ca. 48h betragen.

Durch Aufkohlen lassen sich gezielt viele Metallcarbide, wie z.B. Wolframcarbid oder Tantalcarbid, herstellen, wodurch eine harte Randschicht in der Stahloberfläche entsteht. Übliche Eindringtiefen beim Aufkohlen sind ca. 25 bis 30 µm, wobei die Eindringtiefe jedoch durch die im Prozess eingestellten Parameter, insbesondere Prozesszeit und Prozesstemperatur, beeinflusst werden können. Somit kann sichergestellt werden, dass der Stahl nicht durchgehärtet und somit ein z.B. gehärteter Draht komplett spröde wird, sondern ein ungehärteter, also vergleichsweise zäher und weicher Kern bestehen bleibt, der für die erforderliche Festigkeit des Stahls sorgt.

Nitrieren (Nitridieren) bezeichnet ein Verfahren, bei welchem Stickstoff in Metalle, insbesondere Stahl, eindiffundiert. In der Werkstoffoberfläche bildet sich durch Eindiffusion von Stickstoff eine Schicht, die in der Regel zwei Zonen aufweist, einer durch Ausbildung von Metallnitriden, insbesondere Eisennitriden, sehr harten Verbindungsschicht mit eine Dicke von ca. 2µm bis 20µm und einer darunter liegenden Diffusionszone, in der Stickstoff bis zu einer bestimmten Tiefe in der ferritischen Metallmatrix eingelagert ist. Bei hinreichend hoher Bauteiltemperatur und einer entsprechend langen Behandlungszeit bei bestimmten Stählen ist eine Eindringtiefe von bis zu ca. 0,8 mm möglich.

Zusätzlich führt der in fester Lösung eingelagerte Stickstoff zu einer Erhöhung der Dauerschwingfestigkeit, welche insbesondere für stetig bewegte bzw. vibrierende Siebe und Siebgewebe besonders vorteilhaft ist.

Um den Korrosionsschutz dieser Schichten zu erhöhen, ist es möglich, die Verbindungsschicht zu oxidieren, beispielsweise durch eine Dampfbeaufschlagung, die die Eisenanteile korrodieren lässt und so eine Oxidschicht bildet.

Unterschieden werden Gasnitrieren (z.B. in einer Ammoniak Atmosphäre bei leichtem Überdruck), Badnitrieren (in Salzbädern), und Plasmanitrieren (mittels ionisiertem Gas).

Für das Behandeln von insbesondere sehr feinen Siebgeweben ist das Bereitstellen von Stickstoff in der Gasphase vorteilhaft, um eine gleichmäßige Behandlung der Oberfläche zu erreichen. Vorteilhaft wird hierbei Ammoniak geregelt zugeführt, um die gewünschte Ammoniak-Atmosphäre zu erhalten. Gasnitrieren wird herkömmlicherweise bei Temperaturen von bis zu ca. 520°C durchgeführt. Moderne Verfahren benutzen Prozesstemperaturen von bis zu ca. 400°C. Die Prozess- bzw. Behandlungsdauer beim Nitrieren kann z.B. bis zu ca. 24h betragen.

Das Plasmanitrieren ist besonders vorteilhaft, da hierbei nochmals abgesenkte Prozesstemperaturen verwendet werden können. Das Verfahren arbeitet mit einem Stickstoff-Wasserstoff-Gasgemisch als Nitriermedium, das in einen Vakuumofen bei einem Unterdruck von beispielsweise ca. 50 Pa bis 600 Pa mittels einer stromstarken Glimmentladung ionisiert wird. Wegen der hohen energetischen Wirkung des Plasmas kann die Arbeitstemperatur beim Plasmanitrieren gegenüber dem Gasnitrieren erheblich abgesenkt werden, so dass dieses Verfahren auch bei verzugsempfindlichen Werkstoffen und Bauteilen eingesetzt werden kann. Der typische Arbeitsbereich beim Plasmanitrieren von Eisenlegierungen liegt zwischen ca. 350 °C und 600 °C.

Das zu behandelnde Werkstück wird in einem evakuierten Behälter als Kathode geschaltet, die Behälterwand als Anode. Ein stickstoffhaltiges Gas wird in geringen Mengen zugeführt. Nach Anlegen einer Hochspannung werden die Stickstoffatome in der Nähe der Kathode ionisiert. Die positiv geladenen Stickstoffionen werden zum Werkstück hin beschleunigt, treffen dort mit hoher kinetischer Energie auf und lagern sich in die Oberfläche ein. Die Auftreffenergie wird teilweise in Wärme umgesetzt. Je nach Prozessführung wird eine reine Diffusionsschicht oder bei Überschreiten der Löslichkeitsgrenze zusätzlich eine Verbindungsschicht von ca. 2 µm bis 20 µm Dicke aufgebaut. Während die erzielbare Randhärte im Wesentlichen von der Stahlsorte bestimmt wird, werden die Dicken der erzeugten Schichten zusätzlich durch die Behandlungstemperatur, die Behandlungszeiten und das Stickstoffangebot im Prozessgas beeinflusst.

Nitrocarburieren ist ein thermochemisches Verfahren zum Anreichern der Randschicht eines Werkstückes mit Stickstoff und Kohlenstoff. Somit entsteht an der Außenfläche des behandelten Werkstücks die oben bereits beschriebene Nitrierschicht, bestehend aus Verbindungsschicht und Diffusionsschicht und zusätzlich wird jedoch Kohlenstoff in die Werkstoffoberfläche eingelagert, wobei die Eindringtiefe des Kohlenstoffs etwas höher als die des Stickstoffs ist. Durch den Stickstoff wird insbesondere das im Stahl enthaltene Chrom oberflächennah zu besonders harten Chromnitriden umgesetzt. Eine durch Nitrocarburieren erzeugte Verbindungsschicht ist sehr verschleiß- und korrosionsbeständig, jedoch weniger spröde als eine durch Nitrieren erzeugte Verbindungsschicht. Übliche Eindringtiefen beim Nitrocarburieren sind ca. 14µm bis 18µm.

Beim Nitrocarburieren wird zwischen Gasnitrocarburieren und Plasmanitrocarburieren unterschieden. Die Vorgehensweise ist hier die gleiche wie beim Nitridieren, abgesehen von der verwendeten Gas-Atmosphäre, welche zusätzlich ein kohlenstoffhaltiges Gas enthält.

Die beim Nitrocarburieren verwendeten Prozesstemperaturen entsprechen im Wesentlichen den beim Nitridieren verwendeten Prozesstemperaturen, also bis zu ca. bis zu ca. 400°C beim Gasnitrocarburieren und zwischen ca. 350 °C und 600 °C beim Plasmanitrocarburieren. Auch die Prozess- bzw. Behandlungsdauer beim Nitrocarburieren entspricht im Wesentlichen der Prozess- bzw. Behandlungsdauer beim Nitridieren, also z.B. bis zu ca. 24h.

Die Gefügeveränderungen bewirken die Ausbildung einer wesentlich härteren und damit verschleißfesteren Oberfläche gegenüber dem unbehandelten Werkstoff, wobei bereits eine sehr geringe Eindringtiefe der Gefügeveränderung von einigen wenigen Hundertstel oder Zehntel Millimetern eine sehr signifikante Aufhärtung der metallischen Oberflächen und damit einen besonders guten Verschleißschutz bewirkt.

Dabei ist es nicht erheblich und nicht von Nachteil, dass es bei der Anwendung der obengenannten Verfahren zur Behandlung fertig gewebter Siebgewebe zu lokalen Abdeckungen an den einzelnen Drähten an den Berührungsflächen zwischen den Schuss- und den Kett-Fäden der Siebgewebe kommt. Diese beim Härten der Siebgewebe nicht erreichten Stellen sind im eingebauten Zustand der Siebgewebe in die Siebbeläge bzw. bei der Verwendung in Siebmaschinen nicht der schleißenden Wirkung der zu siebenden Schüttgüter ausgesetzt und unterliegen folglich auch keinem Verschleiß. Vielmehr kann die ausgelassene Behandlung der Berührungsstellen zwischen Schuss- und Kett-Fäden gerade an diesen unter Umständen kritischen Biegestellen der einzelnen Drähte zu einer zusätzlichen Festigkeit der Drähte bzw. Gewebe führen, da diese Stellen nicht versprödet weil nicht gehärtet sind.

Alle anderen für die Gase in der Behandlungsanlage zum Härten frei zugänglichen Oberflächen der Drähte und Siebgewebe, welche auch speziell der abrasiven Belastung durch die zu siebenden Produkte ausgesetzt sind, werden sehr gleichmäßig behandelt und folglich auch sehr wirkungsvoll gehärtet.

Die erzielbaren Eindringtiefen des Härteverfahrens in die Oberflächen der Drähte des Drahtgewebes betragen je nach speziellem Verfahren und den verwendeten bzw. eingestellten Prozessparametern, wie z.B. die Prozesstemperatur oder Prozessdauer, zwischen 10 µm und 200 µm.

Es ist klar, dass besonders dünne Drähte, aus denen üblicherweise sehr feinmaschige Siebgewebe hergestellt werden (z.B. 35 µm Draht zur Herstellung von Sieben mit z.B. 60 µm Maschenweite), zweckmäßigerweise nur mit geringeren Eindringtiefen gehärtet werden sollen, da eine Eindringtiefe von ringsherum 30 µm den Draht komplett durchhärten würde, wodurch wiederum eine eventuell zu hohe Sprödigkeit des Drahtes erzeugt werden würde mit der Gefahr, dass der Draht bei der schwingenden Belastung in einer Siebmaschine eher bricht.

Vielmehr wird angestrebt, nur eine Endringtiefe von ca. 1/3 des Drahtdurchmessers zu erreichen. Bei einem Drahtdurchmesser von 30 µm wäre beispielsweise eine Eindringtiefe von ca. 10 µm vorteilhaft. Dadurch verbleibt im Inneren des Drahtes ein nicht gehärteter, zäher Materialkern, der eine gute Dauerfestigkeit des Drahtes gewährleistet und der zumindest bei einigen der genannten Härteverfahren sogar eine zusätzliche Zähigkeit des Materialkerns im Vergleich zum Vorzustand des Drahtwerkstoffes erzeugt.

Diese geringe Eindringtiefe des Härtens von z.B. ca. 10 µm ist bei dünnen Drähten auch vollkommen ausreichend, da mit feinen Siebgeweben aus dünnen Drähten auch nur Produkte gesiebt werden mit kleiner Partikelgröße, geringer Partikelmasse und folglich deutlich weniger scharfem Abrasions-Einfluss auf die einzelnen Drähte.

Eine tiefere Eindringtiefe von z.B. bis zu 30 µm ist bei stärkeren Drähten für gröbere Siebgewebe mit größeren Maschenweiten hingegen kein Problem, vielmehr sogar erwünscht. Bei einer Drahtstärke von beispielsweise 600 µm oder 1 mm hinterlässt eine allseitige Eindringtiefe von z.B. 30 µm einen zähen Drahtkern von 540 µm bzw. 940 µm.

Die erzielbare Eindringtiefe des jeweiligen Härteverfahrens in die Oberflächen der Drähte des Drahtgewebes ist abhängig von der Art des verwendeten Härteverfahrens (z.B. Aufkohlen, Nitrieren oder Nitrocarburieren) und kann zusätzlich durch Wahl geeigneter Prozessparameter, wie z.B. die Prozesstemperatur oder Prozessdauer, variiert bzw. eingestellt werden.

Die erfindungsgemäße Methode des Oberflächen-Härtens von Siebgeweben zur Erhöhung der Verschleißfestigkeit hat neben den bereits beschriebenen Vorteilen den weiteren Vorteil, dass sie auch zur Behandlung von feinen und sehr feinen Siebgeweben aus dünnem und sehr dünnem Drahtmaterial verwendet werden kann. Die Verwendung von Gasen zur Behandlung der Stahloberflächen ermöglicht das Vordringen der Gase und damit das Härten auch kleinster und engster Bezirke der Siebgewebe, wie sie durch das Weben von Drahtmaterial naturgemäß entstehen.

Durch das Härten entstehen keinerlei Änderungen der Drahtstärken, sodass die Maßhaltigkeit des hergestellten Siebgewebes bzw. Siebbelages auch nach dem Härten gegeben ist.

Die Korrosionsbeständigkeit von Stählen allgemein und von Edelstählen im Besonderen wird durch die Methoden des Nitrierens und insbesondere durch die Methode des Aufkohlens nicht beeinflusst. Die Methode des Aufkohlens erhöht vielmehr noch die Korrosionsbeständigkeit von Stählen.

Damit können als weiterer Vorteil der beschriebenen Methode des Härtens von Siebgeweben nahezu alle verfügbaren Edelstähle für die Siebherstellung abhängig von der konkreten Korrosionsbelastung des jeweilig zu siebenden Gutes bzw. abhängig von den speziellen Prozessbedingungen wie auch den herzustellenden Kornfraktionen verwendet werden.

Außerdem wird durch die Methode des Nitrierens die Zähigkeit und Elastizität der Stahlwerkstoffe im Inneren der für die Siebherstellung verwendeten Drähte und damit die Zugfestigkeit dieser Drähte erhöht, was insbesondere unter dem Aspekt vorteilhaft ist, dass Siebgewebe neben der abrasiven Belastung durch Verschleiß von Seiten des Produktes auch starken Belastungen durch die ständigen Wechselbelastungen in Folge der Vibrationen ausgesetzt sind.

Werden Siebbeläge für insbesondere Rundmaschinen wie Taumelsiebmaschinen hergestellt, so werden die Siebgewebe bei der Herstellung eines Siebdecks unter einer vorgegebenen allseitigen Spannung auf den Siebrahmen gespannt, dort mit dem Siebrahmen verklebt oder verlötet und so lange unter Spannung gehalten, bis der Klebstoff oder der Lötzusatzstoff ausgehärtet ist. Durch dieses Vorgehen wird ein Siebbelag erzeugt, dessen Siebgewebe eine zweckmäßig hohe Spannung aufweist, welche wiederum für ein qualitativ hochwertiges Siebergebnis von Vorteil bzw. entscheidend ist.

Auch wenn bei den oben beschriebenen Verfahren relativ geringe Temperaturen von z.B. bis ca. 400 °C oder bis ca. 480 °C oder auch noch geringer verwendet werden, so ist dennoch zu erwarten, dass sich durch die Temperaturbeaufschlagung Spannungen im Material lösen, also hier speziell Spannungen im Material durch das Ziehen des Drahtes. Somit würden die Siebgewebe eventuell mehr oder weniger gleichmäßig oder auch ungleichmäßig beeinflusst, könnten sich also unter Umständen etwas verziehen.

Ein Härten der Siebgewebe und ein damit einhergehender Abbau von Spannungen in den Drähten des Siebgewebes vor dem Bespannen der Siebrahmen zum Siebbelag ist daher besonders vorteilhaft, da hierbei vermieden wird, dass die Spannung des Siebgewebes auf den hergestellten Siebbelägen (Sieben) durch die mit dem Härten einhergehende Temperaturbelastung nachlässt, wie es bei einem Härten schon aufgespannter Siebbeläge oder auch durch die Verwendung unbehandelter Siebgewebe möglich sein könnte bzw. wahrscheinlich ist.

Durch das Behandeln der Siebgewebe vor dem Bespannen der Siebrahmen zum Siebbelag ist einerseits ein durch das Lösen der Spannungen im Draht entstehender Verzug im Siebgewebe unproblematisch und andererseits kann dadurch sogar eine gleichmäßigere Siebbespannung erzielt werden, wodurch die Spannung des Siebgewebes länger erhalten werden könnte.

Als besonders vorteilhaft ist hervorzuheben, dass die bekannte allgemeine Vorgehensweise zur Herstellung von Siebbelägen aus Siebgeweben und gegebenenfalls Siebrahmen beibehalten werden kann. Jedoch werden in Unterscheidung zu der bekannten Vorgehensweise die Siebgewebe nicht aus zur Erzielung einer besseren Verschleißfestigkeit bereits vorbehandeltem verschleißfestem Drahtmaterial hergestellt. Stattdessen werden herkömmlich hergestellte, handelsübliche Siebgewebe, welche in ihrer Vielfalt standardmäßig auf dem Markt verfügbar sind, behandelt. Dies kann in genau der Anzahl und Größe erfolgen, die zur Herstellung der speziellen gewünschten verschleißgeschützten Siebbeläge prozess- und kundenabhängig erforderlich sind.

Somit können mit dem erfindungsgemäßen Verfahren auf einfache und preiswerte Weise Siebe bzw. Siebbeläge in benötigter Menge und Qualität hergestellt werden, wobei die Siebe bzw. Siebbeläge durch Härtung der Oberflächen der Drähte des Siebgewebes einen besonders hohen Verschleißwiderstand aufweisen.

## Patentansprüche

1. Verfahren zur Erhöhung der Verschleißfestigkeit eines aus Draht hergestellten metallischen Siebgewebes, wobei das Verfahren umfasst:
Behandeln einer Oberfläche eines metallischen Siebgewebes mittels eines thermochemischen Randschichtverfahrens zur Erhöhung der Oberflächenhärte und des Verschleißwiderstands von Metallen, wobei das thermochemische Randschichtverfahren die Gefügestruktur des behandelten Metalls bis zu einer vorgegebenen Eindringtiefe verändert, wobei in der Metalloberfläche eine harte Oberflächenschicht gebildet wird.

2. Verfahren zur Erhöhung der Verschleißfestigkeit eines metallischen Siebgewebes nach Anspruch 1, wobei das metallische Siebgewebe aus Eisendrähten oder Stahldrähten gewebt ist.

3. Verfahren zur Erhöhung der Verschleißfestigkeit eines metallischen Siebgewebes nach Anspruch 2, wobei die vorgegebene Eindringtiefe höchstens ein Drittel eines Durchmessers der Eisendrähte oder Stahldrähte beträgt, aus denen das metallische Siebgewebe gewebt ist.

4. Verfahren zur Erhöhung der Verschleißfestigkeit eines metallischen Siebgewebes nach einem der vorgehenden Ansprüche, wobei das metallische Siebgewebe in einen spiralförmig gerollten Zustand gebracht wird, bevor das Siebgewebe mittels des thermochemischen Randschichtverfahrens behandelt wird.

5. Verfahren zur Erhöhung der Verschleißfestigkeit eines metallischen Siebgewebes nach Anspruch 4, wobei eine Vielzahl von Abstandhaltern zwischen einzelnen Gewebelagen des spiralförmig gerollten Siebgewebes angeordnet wird, bevor das Siebgewebe mittels des thermochemischen Randschichtverfahrens behandelt wird, um zu gewährleisten, dass sich die einzelnen Gewebelagen nicht gegenseitig berühren.

6. Verfahren zur Erhöhung der Verschleißfestigkeit eines metallischen Siebgewebes nach einem der Ansprüche 1 - 3, wobei das metallische Siebgewebe auf einen Rahmen gespannt wird, bevor das Siebgewebe mittels des thermochemischen Randschichtverfahrens behandelt wird.

7. Verfahren zur Erhöhung der Verschleißfestigkeit eines metallischen Siebgewebes nach einem der vorgehenden Ansprüche, wobei für das Behandeln der Oberfläche des metallischen Siebgewebes eines der folgenden thermochemischen Randschichtverfahren verwendet wird:
Aufkohlen, Nitrieren, oder Nitrocarburieren.

8. Verfahren zur Erhöhung der Verschleißfestigkeit eines metallischen Siebgewebes nach Anspruch 7, wobei beim Aufkohlen eine Prozesstemperatur von bis zu 480°C und beim Nitrieren und Nitrocarburieren eine Prozesstemperatur von bis zu 400°C verwendet wird.

9. Verfahren zur Herstellung eines Siebbelags mit erhöhter Verschleißfestigkeit, wobei das Verfahren aufweist:
Behandeln eines metallischen Siebgewebes mit einem Verfahren zur Erhöhung der Verschleißfestigkeit eines metallischen Siebgewebes gemäß einem der vorhergehenden Ansprüche; und
Aufspannen des behandelten Siebgewebes auf einem Siebrahmen unter einer vorgegebenen Spannung, um einen Siebbelag mit erhöhter Verschleißfestigkeit zu erhalten.

10. Vorrichtung, welche dafür eingerichtet ist, das Verfahren gemäß einem der vorhergehenden Ansprüche auszuführen.

11. Siebgewebe, dessen Verschleißfestigkeit durch Anwendung des Verfahrens nach einem der Ansprüche 1 bis 8 erhöht worden ist.

12. Siebbelag mit erhöhter Verschleißfestigkeit, welcher gemäß dem Verfahren nach Anspruch 9 hergestellt worden ist.
